# EUROPÄISCHE PATENTSCHRIFT

(11) **EP 2 381 153 B1**
(45) Veröffentlichungstag und Bekanntmachung des Hinweises auf die Patenterteilung: **29.05.2013**
(21) Anmeldenummer: 10004315.7
(22) Anmeldetag: 23.04.2010
(51) Int. Cl.: F16L 41/06, F16L 55/10, F16L 55/115

(54) **Verfahren für das Trennen und Verschließen von unter Druck stehenden Gasleitungen**
Method for cutting and obturating pressurised gas pipelines
Procédé pour la rupture et l'obturation de conduites de gaz sous pression

(43) Veröffentlichungstag der Anmeldung: 26.10.2011
(73) Patentinhaber: Stadtwerke Karlsruhe GmbH, 76127 Karlsruhe (DE)
(72) Erfinder: Prinz, Hans-Jürgen, 76189 Karlsruhe (DE); Vogel, Thomas, 76344 Eggenstein-Leopoldshafen (DE)
(74) Vertreter: Lemcke, Brommer & Partner

(56) Entgegenhaltungen:
- EP-A1- 2 175 185
- DE-A1-102007 016 749
- GB-A- 1 367 074
- JP-A- 7 233 894
- US-A- 2 899 983

## Beschreibung

Die Erfindung betrifft ein Verfahren nach dem Oberbegriff des Patentanspruchs 1 zum Trennen und dauerhaften Verschließen von unter Druck stehenden Gasleitungen, vorzugsweise Gasleitungen mit einem Außendurchmesser DN 32 bis DN 65 und einem Betriebsdruck bis 100 mbar, höchst vorzugsweise Gasnetz - oder Hausanschlussleitungen, wobei in die zu trennende, unter Druck stehende Gasleitung ein die Gasleitung durch Bildung eines Schaumpfropfens abdichtender Schaum im fluiden Zustand eingebracht wird, wobei anschließend die Gasleitung getrennt wird, und wobei dann die Gasleitung an der Trennstelle mit einem Verschlussmittel dauerhaft verschlossen wird.

Ein derartiges Verfahren ist aus DE 102007016749 A1, sowie aus der europäischen Patentanmeldung 08 017 589.6 der Anmelderin bekannt. Ein ähnliches Verfahren, bei dem jedoch eine Wiederverwendung der Gasleitung an der Trennstelle im Vordergrund steht, ist aus der JP 07-233894 bekannt.

Für das Trennen von unter Druck stehenden Gasnetzanschlussteitungen gab es - von dem gattungsgemäßen Verfahren abgesehen - bisher zwei verschiedene Vorgehensweisen.

Entweder wurde das Leitungsrohr zunächst mittels eines Rohrabschneiders durchtrennt und der Leitungsquerschnitt unter Einsatz eines sog. Dichtschnurknäuels lediglich provisorisch verschlossen.

Die andere Möglichkeit, wie sie beispielsweise in der US 5,878,884 beschrieben ist, beinhaltete das Einsetzen einer sog. Absperrblase in das Leitungsrohr und dessen anschließende Durchtrennung.

Bei beiden Verfahren wird schließlich eine Endkappe, ein Metallstopfen oder -keil auf bzw. in das Rohrende geschweißt.

Das Trennen einer Netzanschlussleitung ohne vorherige Unterbrechung der Gaszufuhr stellt nach geltenden Vorschriften, beispielsweise der BGR 500 / Teil 2, Kapitel 2.31, ein Arbeitsverfahren mit erhöhter Gefährdung dar, da es mit dem Austritt größerer Mengen an Gas in einer Größenordnung von ca. 500 Litern verbunden ist. Es darf deshalb nur in Ausnahmefällen und unter Beachtung besonderer und umfangreicher Sicherheitsmaßnahmen durchgeführt werden.

Der Einsatz einer Absperrblase - wie oben beschrieben - ist nur unter hohem zeitlichem und finanziellem Aufwand möglich. Das Trennen von unter Druck stehenden Gasnetzanschlussleitungen mittels einer Absperrblase dauert durchschnittlich etwa drei bis vier Stunden. Die Anschaffungskosten von sog. "Mini-Anbohr- und Blasensetzgeräten", die zurzeit von verschiedenen Herstellern angeboten werden, betragen pro Gerät ca. 2.500,- €. Außerdem bleiben bei diesem Verfahren aufgrund des erhöhten Platzbedarfs zum Setzen der Blase verhältnismäßig lange "Rohrstummel" an der Hauptleitung zurück, die ein zusätzliches Schadensrisiko darstellen. Diese sind je nach örtlichen Gegebenheiten durchschnittlich etwa 30 bis 40 cm lang, teilweise auch länger.

Das vorbekannte Verfahren aus dem Betrieb der Anmelderin wird den Anforderungen der weiter oben genannten BGR-Vorschrift bereits vollumfänglich gerecht. Es hat sich allerdings in der Praxis herausgestellt, dass das verwendete Schaummaterial, vorzugsweise ein Mehrkomponenten-Polymerschaum, möglicherweise gewisse nachteilige Alterungserscheinungen zeigt und deshalb die Gasdichtigkeit an der Trennstelle möglicherweise allein nicht dauerhaft gewährleisten kann. Mit anderen Worten: Dem eingangs erwähnten dauerhaften Verschlussmittel kommt in diesem Zusammenhang eine besondere Bedeutung zu. Aufgrund der jedoch zumindest anfänglich gegebenen hermetischen Dichtwirkung des eingebrachten Schaummaterials ist es bei dem vorbekannten Verfahren nicht ohne Weiteres möglich, die Gasdichtigkeit des dauerhaften Verschlussmittels zu überprüfen, was jedoch eine entscheidende Voraussetzung für die praktische Verwendbarkeit derartiger Verfahren ist.

Der Erfindung liegt gegenüber diesem Stand der Technik die Aufgabe zugrunde, ein gattungsgemäßes Verfahren zum Trennen von unter Druck stehenden Gasleitungen anzugeben, welches mit geringerem materiellen, finanziellen und auch zeitlichen Aufwand durchgeführt werden kann, ohne dass dabei zu viel Gas aus der Gasleitung entweicht, und welches eine überprüfbare und dauerhafte Dichtigkeit der Gasleitung am Verschlussende gewährleistet.

Die Erfindung löst diese Aufgabe mittels eines Verfahrens mit den Merkmalen des beigefügten Patentanspruchs 1. Vorteilhafte Weiterbildungen sind Gegenstand von Unteransprüchen, deren Wortlaut hiermit durch ausdrückliche Bezugnahme in die Beschreibungseinleitung aufgenommen wird, um unnötige Textwiederholungen zu vermeiden.

Erfindungsgemäß ist ein Verfahren zum Trennen und dauerhaften Verschließen von unter Druck stehenden Gasleitungen, vorzugsweise Gasleitungen mit einem Außendurchmesser DN 32 bis DN 65 und einem Betriebsdruck bis 100 mbar, höchst vorzugsweise Gasnetz- oder Hausanschlussleitungen, wobei in die zu trennende, unter Druck stehende Gasleitung ein die Gasleitung durch Bildung eines Schaumpfropfens abdichtender Schaum im fluiden Zustand eingebracht wird, wobei anschließend die Gasleitung getrennt wird, und wobei dann die Gasleitung an der Trennstelle mit einem Verschlussmittel dauerhaft verschlossen wird, dadurch gekennzeichnet, dass als Verschlussmittel eine hülsenartige Endkappe auf die Gasleitung aufgesetzt und stoffschlüssig mit der Gasleitung verbunden wird, und dass anschließend eine lokale Wärmebehandlung der Gasleitung in deren axialer Richtung im Bereich der Endkappe erfolgt, so dass in dem Schaumpfropfen ein Kanal geschaffen wird, durch den Gas bis zu der stoffschlüssigen Verbindung zwischen Endkappe und Gasleitung vordringt.

Das erfindungsgemäße Verfahren ermöglicht das Trennen von unter Druck stehenden Gasleitungen mit äußerst geringem materiellen, finanziellen und zeitlichem Aufwand, ohne dass dabei ein sicherheitsrelevanter Gasverlust auftritt. Dazu wird vorzugsweise zunächst mit einer langsam laufenden Druckluftbohrmaschine beispielsweise etwa 20 cm entfernt von der Verbindung zu einer Versorgungsleitung ein Loch mit beispielsweise ca. 6 mm Durchmesser in die Gasleitung, insbesondere eine Netzanschlussleitung, gebohrt. Bis zum Einbringen des Schaums kann die Bohrung kurzfristig mit einem nicht dauerhaften Verschlussmittel, wie einem Gummipfropfen, abgedichtet, falls nicht die erfindungsgemäße Anbohrvorrichtung zum Einsatz kommt.

Dann wird ein aushärtbarer Schaum mittels beispielsweise eines Kunststoffröhrchens durch das Bohrloch in das Leitungsrohr bzw. die Gasleitung eingebracht. Dieser bildet im Innern der Gasleitung einen Schaumpfropfen, der die Bohrung in sekundenschnelle abdichtet. Dabei wird die Schaummenge möglichst exakt auf den jeweiligen Leitungsdurchmesser der Netzanschlussleitung abgestimmt werden, um zu verhindern, dass der Schaum in die Versorgungsleitung gelangt, und um die Bildung eines hinreichend langen und dichten Schaumpfropfens zu gewährleisten.

Nach einem Zeitraum von typischerweise etwa 15 Minuten hat der Schaum abgebunden. Die Gasleitung kann nun wenige Zentimeter nach der Verbindung mit der Versorgungsleitung mit einem Rohrabschneider getrennt werden. Auf das offen liegende und mit Schaum abgedichtete Gasleitungsende wird zuletzt ein dauerhaftes Verschlussmittel, wie eine Endkappe, aufgesetzt und stoffschlüssig befestigt, vorzugsweise angeschweißt.

Erfindungsgemäß ist die genannte Endkappe bzw. das Verschlussmittel hülsenartig ausgebildet, und es erfolgt anschließend eine lokale Wärmebehandlung der Gasleitung in deren axialer Richtung im Bereich der Endkappe. Diese lokale Wärmebehandlung sorgt dafür, dass in dem Schaümpfropfen durch Pyrolyse ein entlang der Innenwand der Gasleitung verlaufender Kanal erzeugt wird, welcher ermöglicht, dass Gas aus der unter Druck stehenden Gasleitung durch den Kanal bis zu der stoffschlüssigen Verbindung zwischen Endkappe und Gasleitung gelangt, so dass unmittelbar eine Dichtigkeitsprüfung im Bereich des Verschlussmittels (der Endkappe) vorgenommen werden kann. Vorzugsweise erfolgt die Befestigung des Verschlussmittels bzw. der Endkappe durch Verschweißen mit der Gasleitung, so dass in diesem Fall die Gasdichtigkeit der entsprechenden Schweißnaht, welche im Falle einer möglichen Degenerierung des Schaumpfropfens für die Gasdichtigkeit an der Trennstelle dauerhaft verantwortlich ist, sofort überprüft werden kann.

Im Zuge einer bevorzugten Weiterbildung des erfindungsgemäßen Verfahrens erfolgt die genannte lokale Wärmebehandlung dadurch, dass eine Schweißnaht in axialer Richtung auf der Oberfläche der Endkappe gesetzt wird. Die vorliegende Erfindung ist jedoch keinesfalls auf eine derartige Wärmebehandlung beschränkt.

Um auch bei einem leicht undichten Schaumpfropfen einen Gasaustritt an der Trennstelle sofort zu verhindern, was insbesondere im Zusammenhang mit dem bevorzugten Verschweißen von Endkappe und Gasleitung wünschenswert ist, sieht eine andere Weiterentwicklung des erfindungsgemäßen Verfahrens vor, dass als Verschlussmiftel eine hülsenartige Endkappe verwendet wird, welche innenliegend ein integriertes Dichtmittel, vorzugsweise in Form eines O-Rings, enthält, welches die Gasleitung gasdicht gegenüber der Endkappe abdichtet, bevor diese angeschweißt wurde. In diesem Zusammenhang ist weiterhin vorgesehen, dass bei der vorzunehmenden lokalen Wärmebehandlung auch in dem Dichtmittel ein Kanal geschaffen wird, durch den Gas bis zu der stoffschlüssigen Verbindung zwischen Endkappe und Gasleitung vordringen kann. Mit anderen Worten: Durch die lokale Temperatureinwirkung im Zuge der vorzunehmenden Wärmebehandlung wird zum einen das Dichtmittel (der O-Ring) zerstört, und zum anderen findet am Schaummaterial eine Pyrolyse statt, wodurch der gewünschte Kanal entlang der Zone der lokalen Wärmebehandlung entsteht.

In jedem Fall kann das Gas durch den Kanal bis zu der stoffschlüssigen Verbindung vordringen, welche sofort unter Betriebsdruck auf Gasdichtheit geprüft werden kann.

Eine andere Weiterentwicklung des erfindungsgemäßen Verfahrens sieht vor, dass zum Abdichten der Gasleitung ein Schaum verwendet wird, vorzugsweise ein Mehrkomponenten-Polymerschaum, wie bereits erwähnt, der im Wesentlichen dauerhaft an der Innenwand der Gasleitung haftet. Die dauerhafte Verbindung zwischen Gasleitung, und Schaummaterial soll dabei höchst vorzugsweise bis hin zu Gasdrücken oberhalb von 100 mbar und insbesondere sogar bis hin zu Gasdrücken von bis zu 8 bar gewährleistet sein.

Eine wieder andere Weiterentwicklung des erfindungsgemäßen Verfahrens sieht vor, dass die Gasleitung im Bereich der vorgesehenen Trennstelle erwärmt wird, bevor der Schaum eingebracht wird, um eine verbesserte Haftwirkung des Schaummaterials an der Innenwand der Gasleitung zu erreichen. Vorzugsweise wird die Gasleitung dabei auf eine Temperatur zwischen 20°C und 50°C, höchst vorzugsweise zwischen 30°C und 40°C erwärmt. Zum Erwärmen der Rohrleitung kann ein Bunsenbrenner verwendet werden, der in der Praxis auch beim Abisolieren der Gasleitung zum Einsatz kommt. Die Gasleitung wird im Bereich der Trennstelle von allen Seiten möglichst gleichmäßig erwärmt. Wie bereits erwähnt, handelt es sich bei der vorstehend beschriebenen Erwärmung der Gasleitung um einen insbesondere bei niedrigen Umgebungstemperaturen wichtigen Verfahrensschritt, da sonst das Schaummaterial nach dem Einspritzen möglicherweise nicht richtig an der Innenwand der Gasleitung haftet, wodurch es zu starken Leckagen kommen kann. Die Erwärmung kann mittels eines Temperaturmessgeräts überwacht werden.

Insbesondere bei der Arbeit an gegen die Horizontale geneigten Gasleitungen, sieht eine andere Weiterentwicklung des erfindungsgemäßen Verfahrens vor, dass zunächst eine erste Anzahl von Schaümstößen oder Schaumhüben in die Gasleitung eingebracht wird, vorzugsweise etwa 5 Schaumhübe. Dann wird eine vorbestimmte Zeit abgewartet, vorzugsweise etwa 30 s, und anschließend wird die für den vorliegenden Gasleitungsdurchmesser zum Abdichten erforderliche restliche Schaummenge in die Gasleitung eingebracht.

Aufgrund des anfänglichen Einbringens von Schaummaterial und die anschließende Wartezeit bildet sich in der Gasleitung ein kleiner "Schaumdamm", welcher das nachfolgend eingebrachte Schaummaterial daran hindert, die Gasleitung in Richtung des bestehenden Gefälles hinunterzufließen. Bei großen Neigungswinkeln oberhalb von etwa 10° bis 20° könnte es sonst dazu kommen, dass sich kein ausreichend langer oder überhaupt kein Schaumpfropfen ausbildet, welcher die Gasleitung abdichtet. Außerdem könnte es passieren, dass Schaummaterial bis in die Hauptgasleitung vordringt, von welcher die zu trennende Gasleitung abzweigt.

Eine besondere Bedeutung kommt im Zuge des erfindungsgemäßen Verfahrens der bereits mehrfach beschriebenen Endkappe zu, welche vorzugsweise wie folgt aufgebaut ist: Sie umfasst einen kurzen Rohrüberschieber, dessen lichter Innendurchmesser nur wenig größer ist als der Außendurchmesser der zu bearbeitenden Gasleitung. In die Endkappe/den Rohrüberschieber kann - wie gesagt - ein O-Ring als zusätzliche Abdichtung integriert sein. Der Deckel, das heißt das geschlossene Ende des Rohrüberschiebers besteht vorzugsweise aus einer metallischen Abdeckplatte, die fest auf das entsprechende Ende des Rohrüberschiebers aufgeschweißt sein kann, wodurch sich die bereits angesprochene Endkappe ergibt.

Nach dem Trennen der Gasleitung wird vorzugsweise das Gasleitungsende mit einer Feile entgratet, dann werden das Rohrleitungsende und das Dichtmittel (der O-Ring) eingefettet, und die Endkappe wird auf das Gasleitungsende aufgeschoben. Wie bereits angesprochen, sorgt der im Überschieber integrierte O-Ring dafür, dass nach dem Aufschieben der Endkappe die Gasleitung auch bei einem undichten Schaumpfropfen vollständig abgedichtet ist. Anschließend wird das übergeschobene Ende der Endkappe mit der Gasleitung verschweißt, das heißt stoffschlüssig mit dieser verbunden. Beim Verschweißen der Endkappe mit der Gasleitung ist darauf zu achten, dass das Dichtmittel nicht beschädigt wird.

Gemäß der der Erfindung zugrunde liegenden Aufgabe soll anschließend die stoffschlüssige Verbindung zwischen Endkappe und Gasleitung unter Betriebsdruck auf Gasdichtigkeit geprüft werden. Dies ist jedoch unmittelbar noch nicht möglich, da sowohl das Dichtmittel (O-Ring) als auch das eingebrachte Schaummaterial dem Gasdruck entgegenwirken, so dass in der Regel überhaupt kein Gas bis an die Verbindungsstelle gelangt. Aus diesem Grund wird im Rahmen einer bevorzugten Ausgestaltung der Erfindung gegenüber die Oberfläche der Endkappe in axialer Richtung der Gasleitung eine Schweißraupe gesetzt, was mit einer entsprechenden lokalen Wärmebehandlung von Endkappe und Gasleitung in diesem Bereich verbunden ist. Durch die hohe Temperatureinwirkung wird zum einen das Dichtmittel (der O-Ring) zerstört, und zum anderen findet an dem Polymerschaum eine Pyrolyse statt, worauf weiter oben bereits hingewiesen wurde. Durch den so geschaffenen Kanal gelangt Gas bis zur Verbindungsstelle zwischen Endkappe und Gasleitung, was die erforderliche Dichtigkeitsprüfung ermöglicht.

Ein vorteilhaftes Ausführungsbeispiel der Erfindung ist in der Zeichnung dargestellt und wird im Folgenden näher beschrieben.
- Figur 1: zeigt in vereinfachter Darstellung einen Schnitt durch eine Gasversorgungsleitung mit angeschlossener, unter Druck stehender Gasnetzanschlussleitung während eines ersten Schrittes des erfindungsgemäßen Verfahrens;
- Figur 2: zeigt die Versorgungsleitung und die Gasnetzanschlussleitung aus Figur 1 nach erfolgtem Trennen und Verschließen der Gasnetzanschlussleitung mittels des erfindungsgemäßen Verfahrens;
- Figur 3: zeigt eine detaillierte Darstellung einer getrennten Gasleitung mit eingebrachtem Schaummaterial und aufgesetzter Endkappe;
- Figur 4: zeigt den Sachverhalt gemäß Figur 3, jedoch nach erfolgter stoffschlüssiger Verbindung zwischen Endkappe und Gasleitung; und
- Figur 5: zeigt die Ausgestaltung gemäß Figur 4 nach erfolgter lokaler Wärmebehandlung in axialer Richtung.

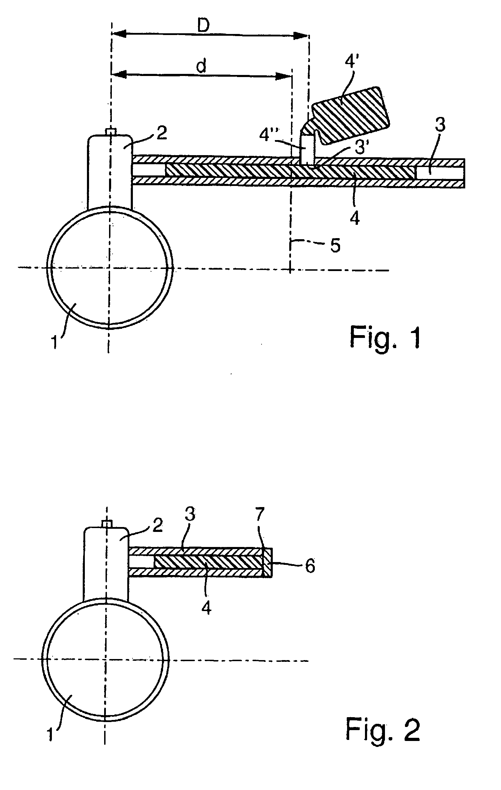

Figur 1 zeigt anhand einer schematischen Schnittdarstellung eine Gasversorgungsleitung 1, an die mittels eines T-Stücks 2 eine Gasnetzanschlussleitung oder Hausanschlussleitung (kurz auch: Gasleitung) 3 angeschlossen ist. In die unter Druck stehende Gasnetzanschlussleitung 3 wird durch eine Bohrung 3' in einem Abstand D von ungefähr 20 cm (oder allgemein D = DN/2 + 15 cm, wobei DN den Durchmesser der Gasversorgungsleitung 1 bezeichnet) bezüglich der Mitte der Versorgungsleitung 1 aus einem Vorratsbehälter 4' (Kartusche) über ein Kunststoffröhrchen 4" ein Schaum eingebracht, ggf. nach vorherigem Erwärmen der Gasleitung, welcher in der Gasneizanschiussteitung 3 einen Schaumpfropfen 4 bildet, der sich über die spätere Trennstelle 5 hinaus erstreckt, die in einem Abstand d, d < D, von etwa 15 cm bezüglich der Mitte der Versorgungsleitung 1 vorgesehen ist.

Die Bohrung wird unter Verwerdung einer erfindungsgemäßen Anbohrvorrichtung (hier nicht gezeigt) vorgenommen, worauf weiter unten noch genauer einzugehen ist.

Gemäß Figur 2 wird anschließend die Gasnetzanschlussleitung 3 an der Trennstelle 5 (vergleiche Figur 1) getrennt und dort mittels einer Metallplatte 6 nach Art einer Endkappe verschlossen, wozu zwischen der Gasnetzanschlussleitung 3 und der Endkappe 6 eine Schweißnaht 7 angebracht wird. Die Endkappe 6 ist in Figur 2 stark vereinfacht dargestellt und wird weiter unten anhand der Figuren 3 bis 5 noch genauer beschrieben.

Figur 3 zeigt eine detaillierte Ansicht der vereinfachend auch als Gasleitung bezeichneten Gasnetzanschlussleitung 3 im Bereich der Trennstelle 5, teilweise im Schnitt. Besonders gut ist in Figur 3 die nach Art eines kurzen Rohrüberschiebers ausgebildete Endkappe 6 erkennbar, weiche an ihrem die abgeschnittene Gasleitung 3 verschließenden Ende einen Deckel 6a aufweist. Dieser ist vorzugsweise bei Bezugszeichen 6b durch eine umlaufende Schweißnaht auf das Rohrteil des Rohrüberschiebers aufgeschweißt. In die Endkappe 6 ist ein Dichtmittel in Form eines O-Rings 8 integriert, welcher die Endkappe 6 gegenüber der Gasleitung 3 abdichtet. Auf diese Weise kann auch dann, wenn der Schaumpfropfen 4 nicht vollständig gasdicht ausgebildet sein sollte, nach dem Aufsetzen der Endkappe 6 kein Gas mehr an der Trennstelle entweichen.

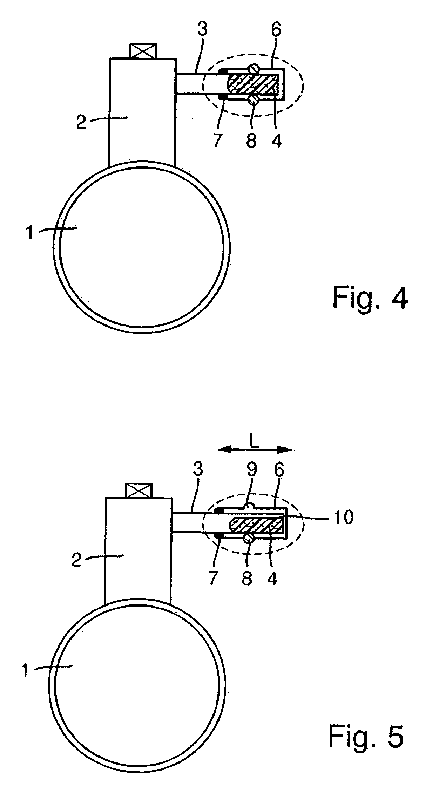

Figur 4 zeigt schematisch im Wesentlichen nochmals den Sachverhalt gemäß Figur 3, allerdings nach erfolgter stoffschlüssiger Verbindung von Endkappe 6 und Gasleitung 3 durch Setzen einer umlaufenden Schweißnaht bei Bezugszeichen 7.

Figur 5 zeigt die Situation nach erfolgter lokaler Wärmebehandlung durch Setzen einer (nicht gezeigten) Schweißraupe auf der Oberfläche der Endkappe 6 in Längsrichtung L der Gasleitung 3. Während beim Setzen der Schweißnaht 7 gemäß Figur 4 der O-Ring 8 ersichtlicherweise nicht beschädigt wurde, kommt es nun beim Setzen der Schweißraupe gemäß Figur 5 zur Zerstörung des Dichtmittels bei Bezugszeichen 9. Außerdem bildet sich durch Pyrolyse des Schaumpfropfens 4 im Bereich der Wärmebehandlungszone (unterhalb und längs der genannten Schweißraupe) ein Kanal 10, welcher dafür sorgt, dass Gas aus der Gasversorgungsleitung 1 über das T-Stück 2 und verbleibende Gasleitung 3 an dem Schaumpfropfen 4 vorbei zwischen Endkappe 6 und Gasleitung 3 hindurch bis zur Schweißnaht 7 gelangt. Diese kann somit unmittelbar auf ihre Gasdichtigkeit geprüft werden, was eine entscheidende Voraussetzung für die Dauerhaftigkeit des geschaffenen Gasleitungsverschlusses ist.

Mit dem hier dargestellten Verfahren tritt nur noch ein Gasverlust in der Größenordnung von unter 10 Litern auf. Bei Einhaltung aller sicherheitstechnischen Bestimmungen ist deshalb mit der Zustimmung der Berufgenossenschaft Energie Textil Elektro Medienerzeugnisse (BGETEM) zur Einstufung als "Arbeitsverfahren mit geringer Gefährdung" nach BGR 500, Kap. 2.31 "Arbeiten an Gasleitungen" zu rechnen.

Die Durchführung des hier dargestellten Verfahrens nimmt ca. zwei Stunden in Anspruch. Die Kosten für die benötigte Menge an Schaum belaufen sich auf etwa 15 Euro. Anschaffungskosten für spezielle Anbohr- und Blasensetzgeräte entfalten. Ein weiterer Vorteil dieses Verfahrens ist, dass die Länge der verbleibenden Rohrstummel an der Hauptleitung lediglich etwa 15 cm beträgt und somit das Risiko einer Beschädigung durch Baggerarbeiten deutlich verringert ist.

Das Verfahren eignet sich ohne Beschränkung insbesondere zum Trennen von unter Druck stehenden Gasleitungen mit einem Außendurchmesser DN 32 bis DN 65 und einem Betriebsdruck bis 100 mbar.

## Patentansprüche

1. Verfahren zum Trennen und dauerhaften Verschließen von unter Druck stehenden Gasleitungen (3), wobei in die zu trennende, unter Druck stehende Gasleitung (3) ein die Gasleitung durch Bildung eines Schaumpfropfens (4) abdichtender Schaum im fluiden Zustand eingebracht wird, wobei anschließend die Gasleitung (3) getrennt wird, und wobei dann die Gasleitung (3) an der Trennstelle (5) mit einem Verschlussmittel (6) dauerhaft verschlossen wird,
**dadurch gekennzeichnet,**
**dass** als Verschlussmittel eine hülsenartige Endkappe (6) auf die Gasleitung (3) aufgesetzt und stoffschlüssig mit der Gasleitung (3) verbunden wird, und dass anschließend eine lokale Wärmebehandlung der Gasleitung in deren axialer Richtung im Bereich der Endkäppe erfolgt, so dass in dem Schaumpfropfen ein Kanal geschaffen wird, durch den Gas bis zu der stoffschlüssigen Verbindung (7) zwischen Endkappe und Gasleitung vordringt.

2. Verfahren nach Anspruch 1,
**dadurch gekennzeichnet,**
**dass** die Endkappe (6) ein Dichtmittel (8) enthält, welches die Gasleitung (3) gasdicht gegen die Endkappe (6) abdichtet, und dass bei der lokalen Wärmebehandlung auch in dem Dichtmittel ein Kanal geschaffen wird, durch den Gas bis zu der stoffschlüssigen Verbindung (7) zwischen Endkappe und Gasleitung vordringt.

3. Verfahren nach Anspruch 2,
**dadurch gekennzeichnet,**
**dass** als Dichtmittel ein O-Ring (8) verwendet wird.

4. Verfahren nach mindestens einem der Ansprüche 1 bis 3,
**dadurch gekennzeichnet,**
**dass** das Einbringen des Schaums in einer ersten Entfernung (D), insbesondere etwa 20 cm entfernt von einer Verbindung der Gasleitung (3) mit einer Gasversorgungsleitung (1) erfolgt, wozu vorzugsweise die Gasleitung mittels einer langsam laufenden Druckluftbohrmaschine angebohrt wird, wobei der Durchmesser der Öffnung (3') etwa 6 mm beträgt und/oder wobei die Öffnung (3') in der Gasleitung (3) bis zum Einbringen des Schaums verschlossen wird, insbesondere mittels eines Gummipfropfens.

5. Verfahren nach mindestens einem der Ansprüche 1 bis 4,
**dadurch gekennzeichnet,**
**dass** das Trennen der Gasleitung (3) in einer zweiten Entfernung (d), insbesondere etwa 15 cm entfernt von der Verbindung der Gasleitung (3) mit der Gasversorgungsleitung (1) erfolgt.

6. Verfahren nach mindestens einem der Ansprüche 1 bis 5,
**dadurch gekennzeichnet,**
**dass** zum Abdichten der Gasleitung (3) ein Schaum verwendet wird, vorzugsweise ein Mehrkomponenten-Polymerschaum, der im Wesentlichen dauerhaft an der Innenwand der Gasleitung haftet, höchst vorzugsweise bis hin zu Gasdrücken oberhalb von 100 mbar, insbesondere bis hin zu Gasdrücken von 8 bar.

7. Verfahren nach mindestens einem der Ansprüche 1 bis 6,
**dadurch gekennzeichnet,**
**dass** die Gasleitung (3) im Bereich der vorgesehenen Trennstelle (5) erwärmt wird, bevor der Schaum eingebracht wird, vorzugsweise auf eine Temperatur zwischen 20°C und 50°C, höchst vorzugsweise zwischen 30°C und 40°C.

8. Verfahren nach mindestens einem der Ansprüche 1 bis 7,
**dadurch gekennzeichnet,**
**dass**, insbesondere bei einer gegen die Horizontale geneigten Gasleitung (3), zunächst eine erste Anzahl von Schaumhüben in die Gasleitung eingebracht wird, vorzugsweise fünf Schaumhübe, dass dann eine vorbestimmte Zeit angewartet wird, vorzugsweise etwa 30 Sekunden, und dass anschließend die für den Gasleitungsdurchmesser zum Abdichten erforderliche restliche Schaummenge in die Gasleitung eingebracht wird.

9. Verfahren nach mindestens einem der Ansprüche 1 bis 8,
**dadurch gekennzeichnet,**
**dass** die lokale Wärmebehandlung erfolgt, indem auf der Oberfläche der Endkappe (6) eine Schweißnaht in axialer Richtung der Gasleitung (3) gesetzt wird.

10. Verfahren nach mindestens einem der Ansprüche 1 bis 9,
**dadurch gekennzeichnet,**
**dass** die Gasleitung (3) zum Einbringen des Schaums unter Verwendung einer Anbohrvorrichtung angebohrt wird, welche Anbohrvorrichtung aufweist:
- ein vorzugsweise schellenartiges Befestigungsteil, welches zum lösbargasdichten Befestigen der Anbohrvorrichtung an der Gasleitung (3) ausgebildet ist und welches eine nach außen öffnende Anbohröffnung aufweist;
- eine im Bereich der Anbohröffnung mit dem Befestigungsteil verbundenes oder lösbar-gasdicht verbindbares Verschließteil, welches zwischen einem erstem Zustand und einem zweiten Zustand umschaltbar ist, wobei in dem ersten Zustand die Anbohröffnung gasdicht verschlossen ist, und wobei in dem zweiten Zustand die Anbohröffnung von außen zugänglich ist; und
- ein mit dem Verschließteil verbundenes oder lösbar-gasdicht verbindbares Anbohrteil, welches zum im Wesentlichen gasdichten Führen eines innenliegenden Anbohrgestänges ausgebildet ist, welches Anbohrgestänge dazu ausgebildet ist, die Gasleitung durch das in dem zweiten Zustand befindliche Verschließteil und die Anbohröffnung hindurch anzubohren.

## Claims

1. Method of cutting and permanently closing pressurised gas lines (3), wherein a foam in the fluid state is introduced into the pressurised gas line (3) to be cut, which foam seals the gas line by forming a foam plug (4), wherein the gas line (3) is subsequently cut, and wherein the gas line (3) is then permanently closed with a closure means (6) at the cutting site (5),
**characterised in that**
as closure means a sleeve-like end cap (6) is mounted on the gas line (3) and bonded to the gas line (3), and then local heat treatment of the gas line in the axial direction thereof is carried out in the region of the end cap, so that there is formed in the foam plug a channel through which gas penetrates to the bonded connection (7) between end cap and gas line.

2. Method according to claim 1,
**characterised in that**
the end cap (6) contains a sealing means (8) which seals the gas line (3) gas-tightly with respect to the end cap (6), and during the local heat treatment a channel is formed also in the sealing means, through which channel gas penetrates to the bonded connection (7) between end cap and gas line.

3. Method according to claim 2,
**characterised in that**
an O-ring (8) is used as sealing means.

4. Method according to at least one of claims 1 to 3,
**characterised in that**
the introduction of the foam is effected at a first distance (D), especially approximately 20 cm, from a connection of the gas line (3) to a gas supply line (1), for which purpose preferably a hole is drilled in the gas line by means of a low-speed compressed-air drilling machine, the diameter of the opening (3') being approximately 6 mm and/or the opening (3') in the gas line (3) being closed until the foam is introduced, especially by means of a rubber plug.

5. Method according to at least one of claims 1 to 4,
**characterised in that**
the cutting of the gas line (3) is effected at a second distance (d), especially approximately 15 cm, from the connection of the gas line (3) to the gas supply line (1).

6. Method according to at least one of claims 1 to 5,
**characterised in that**
for sealing the gas line (3) there is used a foam, preferably a multicomponent polymer foam, which adheres substantially permanently to the inner wall of the gas line, most preferably up to gas pressures above 100 mbar, especially up to gas pressures of 8 bar.

7. Method according to at least one of claims 1 to 6,
**characterised in that**,
before the foam is introduced, the gas line (3) is heated in the region of the intended cutting site (5), preferably to a temperature between 20°C and 50°C, most preferably between 30°C and 40°C.

8. Method according to at least one of claims 1 to 7,
**characterised in that**,
especially in the case of a gas line (3) that is inclined with respect to the horizontal, firstly a first number of foam shots is introduced into the gas line, preferably five foam shots, then a predetermined period is allowed to elapse, preferably about 30 seconds, and subsequently the remaining amount of foam required for sealing for the diameter of the gas line is introduced into the gas line.

9. Method according to at least one of claims 1 to 8,
**characterised in that**
the local heat treatment is effected by applying a welded seam to the surface of the end cap (6) in the axial direction of the gas line (3).

10. Method according to at least one of claims 1 to 9,
**characterised in that**
for introduction of the foam a hole is drilled in the gas line (3) using a tapping device having
- a preferably clamp-like attachment element which is arranged for releasable gas-tight attachment of the tapping device to the gas line (3) and which has a tapping opening that opens towards the outside;
- a closure element which is connected or releasably gas-tightly connectible to the attachment element in the region of the tapping opening, which closure element is switchable between a first state and a second state, the tapping opening being gas-tightly closed in the first state, and the tapping opening being accessible from the outside in the second state; and
- a tapping element which is connected or releasably gas-tightly connectible to the closure element, which tapping element is arranged for substantially gas-tight guidance of an internally located tapping rod, which tapping rod is arranged to drill a hole in the gas line through the closure element in the second state and the tapping opening.

## Revendications

1. Procédé pour sectionner et obturer durablement des conduites de gaz (3) sous pression, sachant qu'on introduit à l'état fluide, dans la conduite de gaz (3) sous pression à sectionner, une mousse étanchant la conduite de gaz en formant un bouchon de mousse (4), sachant que la conduite de gaz (3) est ensuite sectionnée, et sachant qu'enfin la conduite de gaz (3) est durablement obturée au point de sectionnement (5) par un moyen d'obturation (6),
**caractérisé en ce que**, comme moyen d'obturation, une coiffe terminale (6) du genre manchon est posée sur la conduite de gaz (3) et assemblée par liaison de matière à la conduite de gaz (3), et **en ce qu'**on effectue ensuite un traitement thermique local de la conduite de gaz dans sa direction axiale dans la région de la coiffe terminale, de sorte qu'est créé dans le bouchon de mousse un canal par lequel du gaz afflue jusqu'à la liaison de matière (7) entre la coiffe terminale et la conduite de gaz.

2. Procédé selon la revendication 1, **caractérisé en ce que** la coiffe terminale (6) contient un moyen d'étanchéité (8) qui étanche au gaz la conduite de gaz (3) vis-à-vis de la coiffe terminale (6) et **en ce que**, lors du traitement thermique local, un canal par lequel du gaz afflue jusqu'à la liaison de matière (7) entre la coiffe terminale et la conduite de gaz est également créé dans le moyen d'étanchéité.

3. Procédé selon la revendication 2, **caractérisé en ce qu'**on utilise comme moyen d'étanchéité un joint torique (8).

4. Procédé selon au moins une des revendications 1 à 3, **caractérisé en ce que** l'introduction de la mousse s'effectue à une première distance (D), notamment à environ 20 cm de distance, d'une liaison de la conduite de gaz (3) avec une conduite d'alimentation en gaz (1), sachant qu'à cet effet, de préférence, la conduite de gaz est percée au moyen d'une perceuse pneumatique à rotation lente, sachant que le diamètre de l'ouverture (3') est d'environ 6 mm et/ou sachant que l'ouverture (3') dans la conduite de gaz (3) est fermée jusqu'à l'introduction de la mousse, en particulier au moyen d'un bouchon en caoutchouc.

5. Procédé selon au moins une des revendications 1 à 4, **caractérisé en ce que** le sectionnement de la conduite de gaz (3) s'effectue à une deuxième distance (d), notamment à environ 15 cm de distance, d'une liaison de la conduite de gaz (3) avec la conduite d'alimentation en gaz (1).

6. Procédé selon au moins une des revendications 1 à 5, **caractérisé en ce qu'**on utilise pour l'étanchement de la conduite de gaz (3) une mousse, de préférence une mousse polymère à plusieurs composants, qui adhère pour l'essentiel durablement à la paroi intérieur de la conduite de gaz, d'une manière particulièrement préférée jusqu'à des pressions de gaz supérieures à 100 mbars, en particulier jusqu'à des pressions de gaz de 8 bars.

7. Procédé selon au moins une des revendications 1 à 6, **caractérisé en ce que** la conduite de gaz (3) est chauffée dans la région du point de sectionnement prévu (5) avant d'introduire la mousse, de préférence à une température comprise entre 20°C et 50°C, d'une manière particulièrement préférée entre 30°C et 40°C.

8. Procédé selon au moins une des revendications 1 à 7, **caractérisé en ce que**, en particulier dans le cas d'une conduite de gaz (3) inclinée par rapport à l'horizontale, on introduit tout d'abord un premier nombre de jets de mousse dans la conduite de gaz, de préférence cinq jets de mousse, **en ce qu'**on attend ensuite pendant une durée prédéterminée, de préférence pendant environ 30 secondes, et **en ce qu'**on introduit enfin dans la conduite de gaz la quantité résiduelle de mousse nécessaire pour l'étanchement pour le diamètre de la conduite de gaz.

9. Procédé selon au moins une des revendications 1 à 3, **caractérisé en ce que** le traitement thermique local s'effectue par le fait qu'on pose sur la surface de la coiffe terminale (6) un cordon de soudure dans la direction axiale de la conduite de gaz (3).

10. Procédé selon au moins une des revendications 1 à 9, **caractérisé en ce que** la conduite de gaz (3) est percée pour introduire la mousse en utilisant un dispositif de percement qui présente :
- une partie de fixation de préférence du genre collier, qui est conçue pour la fixation amovible et étanche au gaz du dispositif de percement sur la conduite de gaz (3) et qui présente une ouverture de percement s'ouvrant vers l'extérieur ;
- une partie de fermeture, qui est ou peut être assemblée de manière amovible et étanche au gaz à la partie de fixation dans la région de l'ouverture de percement et qui peut être commutée entre un premier état et un deuxième état, sachant que dans le premier état, l'ouverture de percement est fermée en étanchéité au gaz et sachant que dans le deuxième état, l'ouverture de percement est accessible de l'extérieur ; et
- une partie de percement, qui est ou peut être assemblée de manière amovible et étanche au gaz à la partie de fermeture et qui est conçue pour guider de manière essentiellement étanche au gaz un train de tiges de percement situé à l'intérieur, lequel est conçu pour percer la conduite de gaz à travers la partie de fermeture se trouvant dans le deuxième état et l'ouverture de percement.
